# EUROPÄISCHE PATENTSCHRIFT

(11) **EP 0 416 475 B1**
(45) Veröffentlichungstag und Bekanntmachung des Hinweises auf die Patenterteilung: **01.02.1995**
(21) Anmeldenummer: 90116718.9
(22) Anmeldetag: 31.08.1990
(51) Int. Cl.: B29B 13/06, B29C 31/00, F26B 21/06, B65G 53/52

(54) **Verfahren und Vorrichtung zum Fördern getrockneten Kunststoffgranulats**
Method and apparatus for transporting dry plastics granules
Procédé et dispositif pour transporter des granulés secs

(30) Priorität: 08.09.1989 DE 3929898
(43) Veröffentlichungstag der Anmeldung: 13.03.1991
(73) Patentinhaber: SOMOS GmbH, D-64331 Weiterstadt (DE)
(72) Erfinder: Gräff, Roderich W., Dr.-Ing., D-6108 Weiterstadt 2 (DE); Becker, Achim H., D-6100 Darmstadt (DE)
(74) Vertreter: Zinngrebe, Horst, Dr.rer.nat.

(56) Entgegenhaltungen:
- EP-A- 0 312 741
- CA-A- 1 052 511
- DE-A- 2 354 745
- DE-A- 2 455 335
- DE-A- 2 742 297
- US-A- 3 410 530
- US-A- 3 597 850
- US-A- 3 780 446
- US-A- 4 420 279

## Beschreibung

Die Erfindung betrifft ein Verfahren nach dem Oberbegriff des Anspruchs 1 sowie eine Vorrichtung nach dem Oberbegriff des Anspruchs 6.

Aus der deutschen Offenlegungsschrift DE-A-2 742 297 ist ein Trocknungsbehälter bekannt, in welchem das den Trocknungsbehälter durchsinkende Granulat von Trockenluft im Gegenstrom getrocknet wird, welche außerhalb des Trocknungsbehälters von der aufgenommenen Feuchtigkeit befreit wird. Ein Teilstrom der dem Trocknungsbehälter zuzuführenden Trockenluft wird dazu benutzt, das den Trocknungsbehälter verlassende, getrocknete Granulat an den Ort seiner Weiterverarbeitung zu fördern.

Dieses Verfahren hat mehrere Nachteile. Zum einen wird dem Trocknungskreislauf fortwährend aufbereitete Trockenluft entzogen, so daß dem Trocknungskreislauf ständig ein entsprechender Außenluftanteil zugeführt werden muß, dessen Feuchtigkeitsgehalt das Adsorptionsmittel des Trocknungskreislaufs jedoch zusätzlich belastet. Selbst wenn man dafür Sorge trägt, daß der zum Fördern benutzte Trockenluftanteil dem Trocknungskreislauf wieder zugeführt wird, bleibt nachteilig, daß der Trockenluftkreislauf für einen höheren Luftdurchsatz ausgelegt werden muß als für die Trocknung des Granulats erforderlich ist. So muß beispielsweise das den Kreislauf aufrechterhaltende Gebläse so stark sein, daß mit dem Trockenluft-Teilstrom eine hinreichende Förderleistung erreicht werden kann. Dies ist sowohl vom apparativen wie auch vom Energie-Aufwand nachteilig.

Die Firma Laboratorie-Teknik, Frederiksund, Dänemark, bietet einen Trockenluft-Trockner mit der Bezeichnung MDD 120 an, bei dem getrocknetes Kunststoffgranulat mit einem Teil der Trockenluft zur Verarbeitungsmaschine gefördert wird. Dieser Parallelstrom zur Förderung fließt ununterbrochen, und zwar manchmal mehr, wenn die Granulatmenge in dem Abgabetrichter absinkt und somit in Kürze Granulat gefördert werden muß, oder auch weniger, wenn sich das Granulat in den Förderschläuchen über dem Abgabetrichter staut.

Aus der DE-A-23 54 745 ist es bekannt, das Trocknen von Kunststoffgranulat vorübergehend zu unterbrechen, um während der Unterbrechung das zum Trocknen der Abluft aus dem Trocknungsbehälter verwendete Adsorptionsmittel regenerieren zu können. Dazu sind ein reversibles Gebläse sowie mehrere Rückschlagventile erforderlich. Die Regenerationszeit beträgt gewöhnlich etwa eine viertel Stunde.

Bekannt sind ferner sogenannte Warmlufttrockner (Maschinenmarkt vom 1. 11. 1975, Vogel Verlag, Würzburg) bei denen ein einen Trocknungsbehälter durchsinkendes Kunststoffgranulat im Gegenstrom durch in den Trocknungsbehälter eingeleitete Warmluft erwärmt und getrocknet wird. Dazu wird von einem Gebläse Außenluft oder Abluft aus dem Trocknungsbehälter angesaugt und in einer Heizeinrichtung auf die erforderliche Temperatur gebracht.

In der US-A-3,780,446 wird das Trocknen von Kunststoffgranulat mittels getrockneter Warmluft durch ein Zeitgeber ständig intermittierend kurzzeitig unterbrochen, um während der Unterbrechungen feuchtes Kunststoffgranulat aus einem Vorratsbehälter in einen Trocknungstrichter zu fördern. Um ein Überfüllen des Trocknungsbehälters zu vermeiden, muß dieser luftdicht abgeschlossen sein.

In dem Dokument DE-A-24 55 335 wird ein Trockner für Kunststoffgranulat beschrieben, bei dem zu trocknendes Granulat durch eine an das Gebläse für Heißluft angeschlossene Saugfördereinrichtung dem Trocknungsbehälter unter Steuerung eines Füllstandsgebers zugeführt wird.

Der Erfindung liegt die Aufgabe zugrunde, mit möglichst geringem Aufwand an Energie und apparativer Ausrüstung das Kunststoffgranulat sowohl zu trocknen wie auch aus dem Trocknungsbehälter zur Weiterverarbeitung zu fördern und/oder den Trocknungsbehälter mit Granulat zu beschicken.

Diese Aufgabe wird erfindungsgemäß durch das Verfahren nach Anspruch 1 sowie durch die Vorrichtung nach Anspruch 6. gelöst.

Zweckmäßige Weiterbildungen der Erfindung sind in den abhängigen Ansprüchen 2 bis 5 und 7 bis 16 beschrieben.

Bei dem eingangs genannten Verfahren ist dazu erfindungsgemäß vorgesehen, daß der Gasstrom durch den Trocknungsbehälter intermittierend kurzzeitig unterbrochen und während der Unterbrechungen das Kunststoffgranulat gefördert wird. Eingehende Untersuchungen haben ergeben, daß kurzzeitige Unterbrechungen von beispielsweise 5 bis 10 Sekunden Dauer den Aufwärm- und Trocknungsprozeß des Granulats nicht nachteilig beeinflussen und die kurzen Unterbrechungszeiten ausreichen, Granulat portionsweise impulsartig zu fördern. So können das Granulat aus einem Vorrat in den Trocknungsbehälter und/oder getrocknetes Granulat aus dem Trocknungsbehälter zur Weiterverarbeitung gefördert werden.

Wie im einzelnen in den Unteransprüchen 4 und 5 angegeben, kann die Erfindung mit Vorteil bei Warmlufttrocknern wie auch bei Trockenlufttrocknern in besonderer Weise ausgenutzt werden.

Da die Einwirkungszeit des Fördermediums (Gas z.B. Luft) auf das getrocknete warme Granulat sehr kurz ist, nimmt dieses aus dem Fördermedium praktisch keine Feuchtigkeit auf. Daher kann als Fördermedium normalerweise die Abluft aus dem Trocknungsbehälter oder sogar Außenluft verwendet werden. Bei besonders empfindlichen Granulaten kann es vorteilhaft sein, getrocknetes Gas (z.B. Luft) zum Fördern zu benutzen.

Dabei erweist es sich insgesamt als zweckmäßig, die Anzahl der Unterbrechungen vom Granulat-Füllstand im Einlauftrichter und/oder im Trocknungsbehälter steuern zu lassen.

Mit besonderem Vorteil kann das erfindungsgemäße Verfahren so gestaltet werden, daß das getrocknete Granulat zum Fördern während einer Unterbrechung in einem Raum bereitgehalten wird, dessen Größe veränderbar ist. Dadurch kann die zu fördernde Menge an Kunststoffgranulat variabel gemacht werden.

Eine zur Ausführung des erfindungsgemäßen Verfahrens geeignete Vorrichtung sieht einen Trocknungsbehälter vor, der einen GranulatAusgabestutzen und diesem gegenüber einen Abluft-Auslaß sowie im Inneren in der Nähe des Ausgabestutzens einen Trockenluft-Auslaß aufweist, und sieht ferner ein Gebläse vor, dessen Saugseite mit dem Abluft-Auslaß und dessen Druckseite über eine Heizung, der gegebenenfalls ein Trockentopf vorgeschaltet ist, mit dem Trockenluft-Auslaß verbunden ist, wobei die Druckseite über ein erstes Stellventil mit der Heizung und mit einer Förderleitung verbunden ist, in welche eine Abgabeleitung aus dem Abgabestutzen mündet, und daß die Saugseite mit dem Abluft-Auslaß über ein zweites Stellventil verbunden ist, welches einen absperrbaren Einlaß aufweist. Damit beschränkt sich der apparative Aufwand auf zwei zusätzliche, relativ einfache Ventile. Mit dieser Vorrichtung läßt sich das getrocknete, bereitgehaltene Granulat besonders einfach mittels Gas, vorzugsweise Luft fördern. Zusätzlich wird bei dieser Anordnung der Raum, in dem sich das zu fördernde Granulat befindet, mit Trockenluft (Warmluft) aus dem Trocknungsbehälter gespült.

Alternativ kann das erste Stellventil dem Trockenlufttopf und der Heizung nachgeschaltet werden, wodurch ein Fördern mit getrockneter und warmer Luft möglich wird.

Obwohl der kurzzeitige Impuls der Förderluft an sich ein Nachsinken von Granulat aus dem Trocknungsbehälter in die Förderleitung verhindert, kann diese Wirkung unterstützt werden, wenn der Ausgabestutzen des Trocknungsbehälters über ein Ventil mit der Förderleitung verbunden ist. Außerdem wird hierdurch verhindert, daß ein Teil der Förderluft in den Trocknungsbehälter entweicht.

Die Rückführung der Förderluft gelingt in Weiterbildung der genannten Vorrichtung besonders günstig dadurch, daß die Luft-Rückführleitung mit der Stelle verbunden ist, an der die Förderluft entnommen wurde, weil dadurch dann sichergestellt wird, daß den Trockenluftkreislauf keine Gasmenge zum Fördern entnommen wird, die durch nasse Aussenluft ersetzt werden muß.

Zum Beschicken des Trocknungsbehälters mit zu trocknendem Granulat mit gegebenenfalls gleichzeitigen Fördern des getrockneten, bereitgehaltenen Granulats ist bei der genannten Vorrichtung zweckmäßig das zweite Stellventil mit dem Luft-Auslaß eines Beschickungsvorsatzes des Trocknungsbehälters verbunden, welcher eine Zuleitung aus einem Granulat-Vorratsbehälter aufweist, wobei das erste Stellventil einen absperrbaren Auslaß besitzt. Zweckmäßig weist die Förderleitung der Vorrichtung an der Mündung der Abgabeleitung eine Tasche auf, deren Volumen veranderbar ist.

Schließlich kann eine ein oder mehrere voreingestellte Zeitglieder enthaltende Steuerung vorgesehen sein, welche Steuersignale aus einer am Einlauftrichter und/ oder am Trocknungsbehälter angeordneten Füllstandssonde aufnimmt und über Steuersignalleitungen mit dem ersten und dem zweiten Stellventil verbunden ist.

Die Erfindung wird nachstehend anhand des in der beigefügten Zeichnung schematisch dargestellten Trockenlufttrockners als Ausführungsbeispiel im einzelnen beschrieben. Es zeigen:
- Fig. 1: eine schematische Darstellung einer Vorrichtung zum Trocknen und Fördern von Kunststoffgranulat,
- Fig. 2: eine Einzelheit aus der Vorrichtung nach Fig. 1 in vergrößertem Maßstab; und
- Fig. 3: eine weitere alternative Einzelheit aus der Vorrichtung nach Fig. 1.

Ein aufrecht stehender, im wesentlichen zylindrischer Trocknungsbehälter 10 besitzt einen Deckel 11, auf welchem ein Beschickungsvorsatz 16 mit Luftabscheider befestigt ist. Neben dem Beschickungsvorsatz 16 ist der Deckel 11 mit einem Abluft-Auslaß 14 sowie mit einer verschließbaren Entlüftungsöffnung 18 versehen.

Am unteren Ende ist der Trocknungsbehälter 10 mit einem GranulatAbgabestutzen 12 ausgerüstet, welcher in ein Rückschlagventil 48 mündet.

Vom Abluft-Auslaß 14 führt eine Luftleitung zu einem zweiten Stellventil 50, dessen Abstromseite über eine Leitung 25 mit einem Filter 26 verbunden ist. Vom Filter 26 führt eine Luftleitung 27 zur Saugseite 34 eines Gebläses 30. Die Druckseite 32 des Gebläses 30 ist über eine Luftleitung 31 mit der Aufstromseite eines ersten Stellventils 40 verbunden. Ein erster Abstrom-Ausgang des ersten Stellventils 40 ist über eine Luftleitung 29 mit einem Trockentopf 24 verbunden, dessen Ausgang über eine weitere Luftleitung 23 in eine Heizung 22 führt. Der Ausgang der Heizung 22 ist über eine Luftzuleitung 19 mit einem Trockenluft-Auslaß 13 verbunden, der sich im Inneren des Trocknungsbehälters 10 in der Nähe seines Granulat-Abgabstutzens 12 befindet.

Damit ist ein Luft-Kreislauf vom Inneren des Trocknungsbehälters 10 über dessen Abluft-Auslaß 14, das zweite Stellventil 50, das Filter 26, das Gebläse 30, das erste Stellventil 40, den Trockentopf 24, die Heizung 22 zu dem Trockenluft-Auslaß 13 geschaffen, längs welchem das Gebläse 30 Luft umwälzen kann.

Bei einer Förderung mit getrockneter Warmluft ist das Stellventil 40 an der Stelle 40' zwischen der Heizung 22 und den Trocknungsbehälter 10 angeordnet.

Eine weitere Luftleitung 42 führt von einer weiteren Abstromseite des ersten Stellventils 40 zu einer Förderleitung 46, in welche eine vom Ventil 48 kommende Leitung 44 mündet. Die Förderleitung 46 öffnet sich über eine Einfüllöffnung 73 in einen Luftabscheider 76, welcher im Einfüllbehälter 72 einer Kunststoff-Verarbeitungsmaschine 70 gehalten ist. Der Luft-Auslaß 75 aus dem Luftabscheider 76 ist über eine Luft-Rückführleitung 20 mit einer entsprechenden Öffnung im Deckel 11 des Trocknungsbehälters 10 verbunden.

Das erste Stellventil 40 besitzt schließlich einen Luftauslaß 47, der ins Freie führt.

In den Luftabscheider 76 ragt ein Fühler 77 einer Füllstandssonde 78, welche auf einer Ausgangsleitung 79 ein Steuersignal an eine Steuerung 80 abgibt, wenn der Fühler 77 keinen hinreichenden Füllstand des Einfüllbehälter 72 mit Kunststoffgranulat vorfindet.

Ferner ist ein Granulat-Vorratsbehälter 60 vorgesehen, aus welchem eine Zuleitung 61 in eine öffnung des Beschickungsvorsatzes 16 führt. Der Beschickungsvorsatz 16 wirkt gleichzeitig als Luftabscheider, so daß über Zuleitung 61 angesaugte Luft aus dem Beschickungsvorsatz 16 über eine Leitung 21 zu einem weiteren aufstromseitigen Anschluß des zweiten Stellventils 50 gelangt.

Das zweite Stellventil 50 besitzt ferner einen Außenluft-Einlaß 51.

Das erste und das zweite Stellventil 40, 50 sind elektrisch auf jeweils einen von drei Durchgangswegen für Luft umstellbar. Dazu führt von der Steuerung 80 eine erste Steuersignalleitung 45 zum ersten Stellventil 40 und eine zweite Steuersignalleitung 43 zum zweiten Stellventil 50. In seiner ersten, zweiten und dritten Stellung verbindet das zweite Stellventil 50 die Luftleitung 25 mit dem Abluft-Auslaß 14, dem Lufteinlaß 21 und dem Außenlufteinlaß 51. In seiner ersten, zweiten und dritten Stellung verbindet das erste Stellventil 40 die Druckseite 32 über Leitung 31 mit der Luftleitung 29, der Luftleitung 42 und dem Luftauslaß 47.

Im Betrieb wird in den Trocknungsbehälter 10 zunächst in üblicher Weise Kunststoffgranulat eingefüllt, das in der Zeichnung mit 17 bezeichnet ist. Das Kunststoffgranulat enthält Feuchtigkeit, von der es in an sich bekannter Weise mittels Trockenluft befreit wird. Für diese Trocknungsphase ist das erste Stellventil 40 von der Steuerung 80 in seine erste Stellung so eingestellt, daß die Luftleitungen 31 und 29 kommunizieren und die Luftleitung 42 sowie der Auslaß 47 abgesperrt sind, und das zweite Stellventil 50 ist durch die Steuerung über Leitung 43 in seine erste Stellung eingestellt, so daß Leitung 25 mit dem Abluft-Auslaß 14 kommuniziert und Leitungen 21 und 51 abgesperrt sind. Das in Betrieb gesetzte Gebläse 30 saugt Luft aus dem Inneren des Trocknungsbehälters 10 über den Abluft-Auslaß 14 an, so daß die Abluft über Leitung 25 das Filter 26 passiert, dort gefiltert wird und vom Gebläse 30 über Leitungen 31, 29 in den Trockentopf 24 gedrückt wird. Dort wird in an sich bekannter Weise der Feuchtigkeitsgehalt der Luft soweit erniedrigt, daß der Taupunkt beispielsweise bei -40° Celsius liegt.

Die den Trockentopf 24 verlassende Trockenluft gelangt über Leitung 23 in die Heizung 22, in welcher sie auf höhere Temperatur gebracht wird, die selbstverständlich unterhalb des Erweichungspunktes des Kunststoffgranulats 17 liegt. Die Trockenluft wird über Leitung 19 dem Trockenluft-Auslaß 13 zugeleitet, aus welchem sie in das Granulat 17 übergeht und dieses von unten nach oben durchstreicht.

Das getrocknete Kunststoffgranulat sammelt sich unterhalb des Trockenluft-Auslasses 13 im unteren Abgabestutzen 12 des Trocknungsbehälters 10, rieselt durch das geöffnete Rückschlagventil 48 in die Leitung 44 bis zu deren Einmündung in die Förderleitung 46 und steht dort bei 5 zum Weiterfördern zur Verarbeitungsmaschine 70 bereit. Zeigt die Füllstandssonde 78 durch ein geeignetes Steuersignal auf Leitung 79 der Steuerung 80 an, daß der Einfüllbehälter 72 zu wenig getrocknetes Granulat enthält, stellt die Steuerung 80 das erste Stellventil 40 durch ein geeignetes Steuersignal auf Leitung 45 in seine zweite Stellung so um, daß Leitungen 29 und 47 abgesperrt sind und Leitungen 31 und 42 kommunizieren. Dadurch gelangt Abluft von der Druckseite 32 des Gebläses 30 in die Förderleitung 46 und reißt das in Leitung 44 sowie an der Einmündung zwischen Leitungen 44 und 42 mit 46 bereitstehende Granulat 5 mit und schiebt es durch die Förderleitung 46 in den Luftabscheider 76 und damit in den Einfüllbehälter 72. Da die letzterwähnte Stellung des ersten Stellventils 40 von der Steuerung 80 nur etwa 5 - 10 Sekunden aufrechterhalten bleibt, wird das trockene Granulat 5 impulsartig mit beträchtlichem Druck durch die Förderleitung 46 in den Einfüllbehälter 72 "geschossen". Das während des Förderns durch den Luftimpuls geschlossene Rückschlagventil 48 verhindert Rückwirkungen auf das Granulat 17 im Trocknungsbehälter 10. Die zum Fördern benutzte Luft gelangt über Leitung 20 wieder in den Kreislauf zurück.

Nach Ablauf der erwähnten Zeitspanne stellt die Steuerung 80 das erste Stellventil 40 wieder auf die erste Schaltstellung um, bei der Leitungen 31 und 29 kommunizieren und Leitungen 42 und 47 gesperrt sind, so daß der Trocknungsvorgang seinen Fortgang nehmen kann. Nach Zeitablauf von etwa 10 Minuten wiederholt sich dieser impulsartige, kurzzeitige Fördervorgang während des Absperrens der Leitung 29, wenn die Füllstandssonde 78 der Steuerung 80 noch weiteren Bedarf an Kunststoffgranulat im Einfüllbehälter 72 anzeigt. Dieses intermittierende, kurzzeitige Fördern des trocknen, in Leitung 44 bereitgehaltenen Kunststoffgranulats 5 wird solange fortgesetzt, bis die Füllstandssonde der Steuerung 80 über Leitung 79 ausreichenden Füllstand von Granulat im Einfüllbehälter 72 anzeigt. Die das Fördern und die Unterbrechung der Trocknung bestimmende Zeitspanne wird durch ein in der Steuerung 80 enthaltenes, nicht dargestelltes und auf die genannten Zeitspannen voreingestelltes Zeitglied bestimmt. Auch die zum Trocknen bis zur nächst möglichen Unterbrechung erforderliche Zeitspanne von etwa 10 Minuten wird von einem in der Steuerung 80 enthaltenen voreingestellten Zeitglied bestimmt.

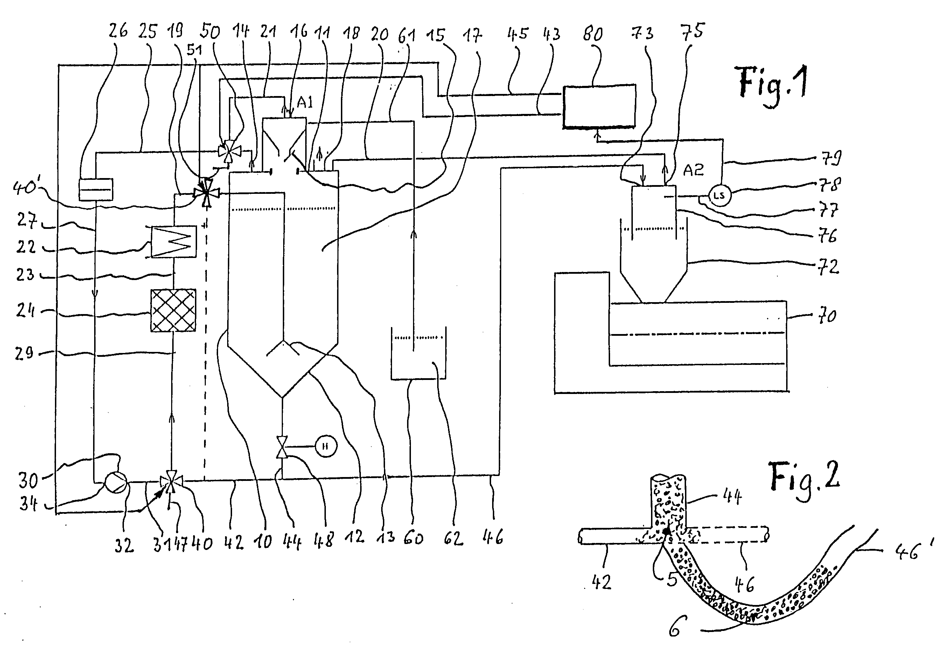

Das Ventil 48 wird so gesteuert, daß es nach einem Fördertakt nur solange für einige wenige Sekunden geöffnet wird, bis das getrocknete Granulat aus dem Trocknungstrichter den unter dem Trochnungstrichter befindlichen Raum (Leitung 44, Fig.2) gefüllt hat. Alternativ kann es auch so gesteuert werden, daß es immer nur dann schließt, wenn der Fördertakt läuft, um sicherzustellen, daß keine Förderluft in den Trocknungstrichter entweicht.

Um den Trocknungsbehälter 10 mit zu trocknendem, im Granulatvorratsbehälter 60 bevorrateten Granulat 62 zu füllen, wird das Beschicken des Trocknungstrichters 10 mit dem Fördern des trocknen Granulats über Förderleitung 46 wie folgt kombiniert:

Wenn der Steuerung 80 auf nicht dargestellte Weise, etwa mittels einer am Trocknungsbehälter 10 angebrachten weiteren Füllstandssonde 15, mitgeteilt ist, daß dem Trocknungstrichter 10 neues Granulat 62 zugeführt werden muß und die Füllstandssonde 78 der Steuerung 80 Bedarf an trockenem Granulat im Einfüllbehälter 72 anzeigt, stellt die Steuerung 80 das erste Stellventil 40 wie erwähnt über eine Zeitspanne von etwa 5 - 10 Sekunden in seine zweite Stellung um. Gleichzeitig stellt die Steuerung 80 durch entsprechendes Steuersignal auf Leitung 43 das zweite Stellventil 50 zeitlich synchron mit dem ersten Stellventil 40 in seine zweite Stellung so um, daß Leitung 21 mit Leitung 25 kommuniziert und der Abluft-Auslaß 14 sowie Einlaß 51 abgesperrt sind. Daraufhin saugt das Gebläse 30 aus dem Granulatvorratsbehälter 60 Luft und damit dort vorhandenes zu trocknendes Granulat über Leitung 61 an. Im Beschickungsvorsatz 16 wird das Granulat von der Luft getrennt, wobei das Granulat durch eine Beschickungsklappe 15 im Deckel 11 in das Innere des Trocknungsbehälters 10 einrieselt, während die Luft über Leitung 21 und zweites Stellventil 50 sowie Leitung 25, den Filter 26 passierend, vom Gebläse 30 angesaugt und über Leitungen 31, 42 das in Leitung 44 bereitgehaltene trockene Granulat 5 durch die Förderleitung 46 in den Einfüllbehälter 72 schießt. Nach Ablauf der erwähnten Zeitspanne von etwa 5 - 10 Sekunden schaltet die Steuerung 80 sowohl das erste Stellventil 40 wie auch das zweite Stellventil 50 in deren erste Stellung um, so daß der Trocknungsprozeß seinen Fortgang nimmt. Besteht nach Ablauf weiterer etwa 10 Minuten weiterhin Bedarf an trocknem Granulat im Einfüllbehälter 72 sowie an zu trocknendem Granulat im Trocknungsbehälter 10, veranlaßt die Steuerung 80 erneut das erläuterte zeitlich synchrone Fördern von Granulat aus dem Vorratsbehälter 60 in den Trocknungsbehälter 10 und Fördern des trocknen Granulats über Förderleitung 46 in den Einfüllbehälter 72.

Das Fördermedium, sei es Abluft aus dem Trocknungsbehälter 10 oder Luft aus dem Vorratsbehälter 60, gelangt aus dem Einfüllbehälter 72 über Rückleitung 20 wieder in den oberen Teil des Trocknungsbehälters und kann diesen über die Entlüftungssöffnung 18 verlassen, die nur dann geöffnet ist, wenn vom Gebläse 30 aus dem Vorratsbehälter 60 Luft angesaugt ist, jedoch geschlossen bleibt, wenn Abluft aus dem Trocknungsbehälter 10 zum Fördern des trocknen Granulats über Förderleitung 46 verwendet wird.

Soll nur der Trocknungsbehälter 10 mit neuem Granulat 62 beschickt, das Granulat 5 jedoch nicht gefördert werden, stellt die Steuerung 80 während einer oder mehrerer Unterbrechungen das erste Stellventil 40 in seine dritte Stellung, in der die Leitungen 29 und 42 abgesperrt, der Auslaß 47 jedoch mit Leitung 31 verbunden sind, und das zweite Stellventil 50 in dessen zweite Stellung um. Wenn nur mit Außenluft gefördert werden soll, stellt die Steuerung 80 das erste Stellventil 40 in dessen zweite Stellung und das zweite Stellventil 50 in dessen dritte Stellung um, in welcher die Leitung 25 nur mit dem Luft-Einlaß 51 verbunden ist.

Die aus einem biegsamen Schlauch bestehende Förderleitung 46 kann abstromseitig hinter der Einmündung der Abgabeleitung 44 abwärts gekrümmt sein, so daß sich eine Tasche 6 ergibt, in welcher das getrocknete Kunststoffgranulat aus der Abgabeleitung 44 einrieselt und dort zum Fördern in den Einlaufbehälter 72 bereitgehalten wird. Je tiefer die Krümmung gewölbt wird, um so größer ist das Volumen der Tasche 6, so daß durch Absenken oder Anheben der Förderleitung 46' die Menge des Kunststoffgranulats gesteuert werden kann.

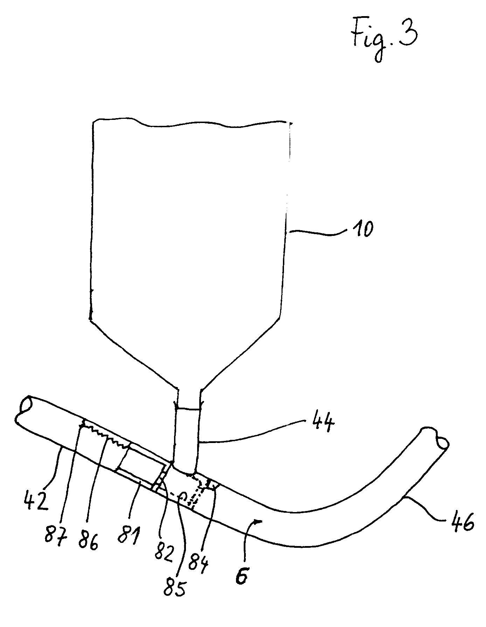

Fig. 3 zeigt eine andere Ausführungsform des Ventils 48. Es hat hier die Form eines Schiebers 81, welcher in der Förderleitung 46 am Übergang zur Leitung 42 und an der Einmündung der Leitung 44 verschiebbar gehalten ist. Der Schieber 81 hat die Form eines Bechers, dessen Boden eine Öffnung 82 hat. Der Schieber 81 wird von einer Feder 86, die bei 87 an der Leitung 42 befestigt ist, in einer Ausgangslage gehalten, in welcher die Einmündung der Leitung 44 in die Förderleitung 46 frei bleibt, damit getrocknetes Granulat aus dem Trocknungsbehälter 10 durch Leitung 44 in die Tasche 6 der Förderleitung einrieseln kann. Während des Förderintervalls schiebt die Förderluft den Schieber 81 gegen die Kraft der Feder 86 vor die öffnung der Leitung 44 bis zu einem Anschlag 84 an der Förderleitung 46. Dabei wird die Einmündung der Leitung 44 in die Förderleitung 46 vom Schieber 81 verschlossen, so daß keine Förderluft in Leitung 44 entweichen kann. Der Schieber 81 nimmt dann die gestrichelt angedeutete Stellung 85 ein. Die Förderluft wird durch die öffnung 82 im Boden des Schiebers 81 gepreßt und schießt das in der Tasche 6 bereitgehaltene Granulat längs der Förderleitung 46 in den Einfüllbehälter 72.

## Patentansprüche

1. Verfahren zum Fördern von Kunststoffgranulat, welches in einem Trocknungsbehälter (10) von warmem Gas im Gegenstrom erwärmt und getrocknet wird, wobei der Gasstrom durch den Trocknungsbehälter (10) intermittierend kurzzeitig unterbrechbar ist, dadurch gekennzeichnet, daß bei Vorliegen eines Steuersignals aus einer Füllstandssonde (15, 78) am Trocknungsbehälter (10) und/oder an einer Weiterverarbeitungsstation (72) der Gasstrom kurzzeitig unterbrochen wird und während der Unterbrechungen Kunststoffgranulat aus einem Vorratsbehälter (60) in den Trocknungsbehälter (10) und/oder getrocknetes Kunststoffgranulat aus dem Trocknungsbehälter (10) in die Weiterverarbeitungsstation (72) gefördert wird.

2. Verfahren nach Anspruch 1, dadurch gekennzeichnet, daß das den Trocknungsbehälter (10) verlassende Abgas wenigstens teilweise wieder aufbereitet und dem Trocknungsbehälter (10) wieder zugeführt wird und während der Unterbrechungen zum Fördern des Kunststoffgranulats und/oder zum Beschicken des Trocknungsbehälters mit Kunststoffgranulat eingesetzt wird.

3. Verfahren nach einem der vorstehenden Ansprüche, dadurch gekennzeichnet, daß das Abgas aus dem Trocknungsbehälter (10) außerhalb desselben getrocknet und erwärmt und dem Trocknungsbehälter wieder zugeführt wird und daß das Abgas während der Unterbrechungen zum Fördern des getrockneten Kunststoffgranulats aus dem Trocknungsbehälter in einen Einfüllbehälter (72) einer Kunststoffverarbeitungsmaschine (70) eingesetzt wird.

4. Verfahren nach einem der vorstehenden Ansprüche, dadurch gekennzeichnet, daß als Gas Luft eingesetzt wird.

5. Verfahren nach einem der vorstehenden Ansprüche, dadurch gekennzeichnet, daß getrocknetes Granulat zum Fördern während einer Unterbrechung in einer Tasche (6) bereitgehalten wird, dessen Größe veränderbar ist.

6. Vorrichtung zur Durchführung des Verfahrens nach einem der vorstehenden Ansprüche, mit einem Trocknungsbehälter (10), der einen Granulat-Abgabestutzen (12) und diesem gegenüber einen Abluft-Auslaß (14) sowie im Inneren in der Nähe des Abgabestutzens (12) einen Warmluft-Auslaß (13) aufweist, mit einem Gebläse (30), dessen Saugseite (34) mit dem Abluft-Auslaß (14) und dessen Druckseite (32) über eine Heizung (22) mit dem Warmluftauslaß (13) verbunden ist, dadurch gekennzeichnet, daß die Druckseite (32) über ein erstes Stellventil (40) mit der Heizung (22) und mit einer Förderleitung (46) verbunden ist, in welche eine Abgabeleitung (44) aus dem Abgabestutzen (12) mündet, und daß die Saugseite (34) mit dem Abluft-Auslaß (14) über ein zweites Stellventil (50) verbunden ist, welches einen absperrbaren Einlaß (51) aufweist.

7. Vorrichtung nach Anspruch 6, dadurch gekennzeichnet, daß das erste Stellventil (40) einen absperrbaren Auslaß (47) aufweist und das zweite Stellventil (50) mit einem Luftauslaß eines Beschickungsvorsatzes (16) des Trocknungsbehälters (10) verbunden ist, welcher eine Zuleitung (61) aus einem Granulat-Vorratsbehälter (60) aufweist.

8. Vorrichtung nach Anspruch 6 oder 7, dadurch gekennzeichnet, daß die Förderleitung (46) zu einem Einfüllbehälter (72) einer Kunststoff-Verarbeitungsmaschine (70) führt.

9. Vorrichtung nach einem der Ansprüche 6 bis 8, dadurch gekennzeichnet, daß der Abgabestutzen (12) über ein Ventil (48) mit der Förderleitung (46) verbunden ist, welches ein Entweichen von Förderluft in den Trocknungsbehälter (10) verhindert.

10. Vorrichtung nach Anspruch 9, dadurch gekennzeichnet, daß das Ventil (48) ein Schieber (81) ist, der durch eine Feder (86) in Ausgangslage gehalten ist, in der der Schieber (81) ein Hineinrieseln von getrocknetem Granulat aus dem Trocknungsbehälter (10) in die Förderleitung (46) freigibt, wobei der Schieber (81) in einer zweiten Stellung den Granulatabgabestutzen (12) des Trocknungsbehälters (10) abschließt.

11. Vorrichtung nach einem der Ansprüche 6 bis 10, dadurch gekennzeichnet, daß der Einfüllbehälter (72) über eine Luft-Rückführleitung (20) mit dem Trocknungsbehälter (10) verbunden ist.

12. Vorrichtung nach einem der Ansprüche 6 bis 11, dadurch gekennzeichnet, daß eine ein Zeitglied enthaltende Steuerung (80) vorgesehen ist, welche Steuersignale aus einer am Einfüllbehälter (72) angeordneten Füllstandssonde (78) aufnimmt und über Steuersignalleitungen (45, 43) mit dem ersten und dem zweiten Stellventil (40, 50) verbunden ist.

13. Vorrichtung nach einem der Ansprüche 6 bis 12, dadurch gekennzeichnet, daß an dem Trocknungsbehälter (10) eine weitere Füllstandssonde (15) angeordnet ist, welche über eine weitere Steuersignalleitung den Füllstand des Trocknungsbehälters anzeigende Signale einer ein Zeitglied enthaltenen Steuerung (80) zuführt, welche über Steuersignalleitungen (45, 43) mit dem ersten und dem zweiten Stellventil (40, 50) verbunden ist.

14. Vorrichtung nach einem der Ansprüche 6 bis 13, dadurch gekennzeichnet, daß zwischen das erste Stellventil (40) und die Heizung (22) ein Trockentopf (24) zum Trocknen des Abgases eingeschaltet ist.

15. Vorrichtung nach einem der Ansprüche 6 bis 14, dadurch gekennzeichnet, daß die Förderleitung (46) an der Mündung der Abgabeleitung (44) eine Tasche (6) aufweist, dessen Volumen veränderbar ist.

16. Vorrichtung nach Anspruch 15, dadurch gekennzeichnet, daß die Tasche (6) von der Krümmung eines biegsamen Schlauches gebildet wird.

## Claims

1. A process for conveying granulated plastics material which is heated and dried in a drying container (10) by means of hot gas flowing in the opposite direction, wherein the flow of gas through the drying container (10) is intermittently interruptable for short periods, **characterised in that** when a control signal is issued from a level-measuring probe (15,78) on the drying container (10) and/or on a subsequent processing station (72), the flow of gas is briefly interrupted, and during the interruptions granulated plastics material is conveyed from a supply container (60) into the drying container (10) and/or dried granulated plastics material is conveyed from the drying container (10) into the subsequent processing station (72).

2. A process in accordance with claim 1, **characterised in that** the waste gas leaving the drying container (10) is at least partially re-treated and re-fed to the drying container (10) and during the interruptions is used to convey the granulated plastics material and/or to load the drying container with granulated plastics material.

3. A process in accordance with one of the preceding claims, **characterised in that** the waste gas from the drying container (10) is dried and heated outside the said container and is re-fed thereto, and during the interruptions the waste gas is used to convey the dried granulated plastics material from the drying container into a filling container (72) in a plastics-processing machine (70).

4. A process in accordance with one of the preceding claims, **characterised in that** air is used as the gas.

5. A process in accordance with one of the preceding claims, **characterised in that** dried granulated material is kept ready for conveyance during an interruption in a pocket (6), and the size thereof is variable.

6. A device for carrying out the process in accordance with one of the preceding claims, with a drying container (10) having a granulated material discharge hopper (12) and a waste air outlet (14) opposite the said hopper, and a hot air outlet (13) in the interior of the container (10), in the vicinity of the discharge hopper (12), and with a ventilator (30), the suction side (34) thereof being connected to the waste air outlet (14) and the pressure side (32) thereof being connected to the hot air outlet (13) via a heating device (22), **characterised in that** the pressure side (32) is connected to the heating device (22) and to a conveying line (46) via a first control valve (40), and a discharge line (44) from the discharge hopper (12) opens into the said conveying line, and the suction side (34) is connected to the waste air outlet (14) via a second control valve (50) which has a closable inlet (51).

7. A device in accordance with claim 6, **characterised in that** the first control valve (40) has a closable outlet (47) and the second control valve (50) is connected to an air outlet in a loading attachment (16) on the drying container (10), the said attachment having a feed line (61) from a granulated material supply container (60).

8. A device in accordance with claim 6 or 7, **characterised in that** the conveying line (46) leads to a filling container (72) in a plastics-processing machine (70).

9. A device in accordance with one of claims 6 to 8, **characterised in that** the discharge hopper (12) is connected to the conveying line (46) via a valve (48), which prevents leakage of conveying air into the drying container (10).

10. A device in accordance with claim 9, **characterised in that** the valve (48) is a slide valve (81) which is retained via a spring (86) in a starting position, in which the slide valve (81) permits flow of the dried granulated material from the drying container (10) into the conveying line (46), the slide valve (81) closing the granulated material discharge hopper (12) in the drying container (10) when in a second position.

11. A device in accordance with one of claims 6 to 10, **characterised in that** the filling container (72) is connected to the drying container (10) via an air return line (20).

12. A device in accordance with one of claims 6 to 11, **characterised in that** a control system (80) containing a time function element is provided, and receives control signals from a level-measuring probe (78) arranged on the filling container (72) and is connected to the first and second control valves (40, 50) via control signal lines (45, 43).

13. A device in accordance with one of claims 6 to 12, **characterised in that** a further level-measurement probe (15) is arranged on the drying container (10), and, via a further control signal line, delivers signals indicating the filling level of the drying container to a control system (80) containing a time function element, and the said control system is connected to the first and second control valves (40, 50) via control signal lines (45, 43).

14. A device in accordance with one of claims 6 to 13, **characterised in that** a drying pot (24) for drying the waste gas is connected between the first control valve (40) and the heating device (22).

15. A device in accordance with one of claims 6 to 14, **characterised in that** the conveying line (46) has a pocket (6) at the opening of the discharge line (44), and the volume of the said pocket is adjustable.

16. A device in accordance with claim 15, **characterised in that** the pocket (6) is formed by the curve of a flexible hose.

## Revendications

1. Procédé pour le transport de granulat de matière plastique qui est réchauffé et séché dans un récipient de séchage (10) par du gaz chaud à contre-courant, le flux de gaz à travers le récipient de séchage (10) pouvant être interrompu brièvement de façon intermittente, caractérisé en ce qu'en présence d'un signal de commande d'une sonde d'état de remplissage (15, 78) sur le récipient de séchage (10) et/ou sur un poste de traitement ultérieur (72), le flux de gaz est interrompu brièvement, et, pendant les interruptions, du granulat de matière plastique provenant d'un récipient de réserve (60) est transporté dans le récipient de séchage (10) et/ou du granulat de matière plastique séché provenant du récipient de séchage (10) est transporté dans le poste de traitement ultérieur (72).

2. Procédé selon la revendication 1, caractérisé en ce que le gaz d'échappement quittant le récipient de séchage (10) est retraité au moins partiellement et recyclé au récipient de séchage (10) et est utilisé pendant les interruptions pour le transport du granulat de matière plastique et/ou pour l'alimentation du récipient de séchage avec du granulat de matière plastique.

3. Procédé selon l'une des revendications précédentes, caractérisé en ce que le gaz d'échappement provenant du récipient de séchage (10) est séché et réchauffé à l'extérieur de celui-ci et recyclé au récipient de séchage et en ce que pendant les interruptions pour le transport du granulat de matière plastique séché provenant du récipient de séchage, le gaz d'échappement est utilisé dans un récipient de remplissage (72) d'une machine de traitement de matière plastique (70).

4. Procédé selon l'une des revendications précédentes, caractérisé en ce que de l'air est utilisé comme gaz.

5. Procédé selon l'une des revendications précédentes, caractérisé en ce que du granulat séché est tenu prêt pour le transport pendant une interruption dans une poche (6) dont la taille est variable.

6. Dispositif pour la réalisation du procédé selon l'une des revendications précédentes, avec un récipient de séchage (10), qui présente un embout de décharge de granulat (12) et opposée à celui-ci une évacuation d'air d'échappement (14) ainsi qu'à l'intérieur à proximité de l'embout de décharge (12) une évacuation d'air chaud (13), avec un ventilateur (30), dont le côté aspirant (34) est relié à l'évacuation d'air d'échappement (14) et le côté refoulant (32) est relié à l'évacuation d'air chaud (13) par l'intermédiaire d'un chauffage (22), caractérisé en ce que le côté refoulant (32) est relié au chauffage (22) par l'intermédiaire d'une première vanne de réglage (40) et à une conduite de transport (46), dans laquelle débouche une conduite de décharge (44) provenant de l'embout de décharge (12), et en ce que le côté aspirant (34) est relié à l'évacuation d'air d'échappement (14) par l'intermédiaire d'une deuxième vanne de réglage (50), laquelle présente une entrée verrouillable (51).

7. Dispositif selon la revendication 6, caractérisé en ce que la première vanne de réglage (40) présente une évacuation verrouillable (47) et en ce que la deuxième vanne de réglage (50) est reliée à une évacuation d'air d'un adaptateur d'alimentation (16) du récipient de séchage (10), lequel présente une amenée (61) provenant d'un récipient de réserve de granulat (60).

8. Dispositif selon la revendication 6 ou 7, caractérisé en ce que la conduite de transport (46) conduit à un récipient de remplissage (72) d'une machine de traitement de matière plastique (70).

9. Dispositif selon l'une des revendications 6 à 8, caractérisé en ce que la conduite de décharge (12) est reliée par l'intermédiaire d'une vanne (48) à la conduite de transport (46), laquelle empêche un dégagement d'air de transport dans le récipient de séchage (10).

10. Dispositif selon la revendication 9, caractérisé en ce que la vanne (48) est un registre (81), qui est maintenu par un ressort (86) en position de sortie, dans laquelle le registre (81) libère un ruissellement de granulat séché provenant du récipient de séchage (10) dans la conduite de transport (46), le registre (81) à une deuxième position fermant l'embout de décharge de granulat (12) du récipient de séchage (10).

11. Dispositif selon l'une des revendications 6 à 10, caractérisé en ce que le récipient de remplissage (72) est relié au récipient de séchage (10) par l'intermédiaire d'une conduite de retour d'air (20).

12. Dispositif selon l'une des revendications 6 à 11, caractérisé en ce qu'une commande (80) contenant un élément de temporisation est prévue, laquelle reçoit des signaux de commande d'une sonde d'état de remplissage (78) disposée sur le récipient de remplissage (72) et est reliée aux première et deuxième vannes de réglage (40, 50) par l'intermédiaire de liaisons de signal de commande (45, 43).

13. Dispositif selon l'une des revendications 6 à 12, caractérisé en ce qu'une autre sonde d'état de remplissage (15) est disposée sur le récipient de séchage (10), laquelle conduit, par l'intermédiaire d'une autre liaison de signal de commande, des signaux indiquant l'état de remplissage du récipient de séchage à une commande (80) contenant un élément de temporisation, laquelle est reliée par l'intermédiaire de liaison de signal de commande (45, 43) aux première et deuxième vannes de réglage (40, 50).

14. Dispositif selon l'une des revendications 6 à 13, caractérisé en ce qu'un pot de séchage (24) pour le séchage du gaz d'échappement est monté entre la première vanne de réglage (40) et le chauffage (22).

15. Dispositif selon l'une des revendications 6 à 14, caractérisé en ce que la conduite de transport (46) présente à l'embouchure de la conduite d'évacuation (44) une poche (6) dont le volume est variable.

16. Dispositif selon la revendication 15, caractérisé en ce que la poche (6) est formée par la courbure d'un tuyau flexible.
